# EUROPÄISCHE PATENTSCHRIFT

(11) **EP 1 602 287 B1**
(45) Veröffentlichungstag und Bekanntmachung des Hinweises auf die Patenterteilung: **08.10.2008**
(21) Anmeldenummer: 05104706.6
(22) Anmeldetag: 01.06.2005
(51) Int. Cl.: A23L 1/314, A23L 1/317, A23L 3/358, A23B 4/24, A21D 2/02, C02F 1/461, C02F 1/467

(54) **Elektrochemisch optimierte Lebensmittel**
Electrochemically improved food products
Produits alimentaires améliorés electrochimiquement

(30) Priorität: 01.06.2004 DE 102004026918
(43) Veröffentlichungstag der Anmeldung: 07.12.2005
(73) Patentinhaber: Prosiegel, Robert, 91801 Markt Berolzheim (DE)
(72) Erfinder: Prosiegel, Robert, 91801 Markt Berolzheim (DE)
(74) Vertreter: Bergmeier, Werner

(56) Entgegenhaltungen:
- EP-A- 1 413 555
- WO-A-95/07857
- WO-A-96/16555
- DE-A1- 10 106 553
- US-B1- 6 284 293
- PATENT ABSTRACTS OF JAPAN Bd. 2000, Nr. 14, 5. März 2001 (2001-03-05) -& JP 2000 308891 A (OKOCHI SHOICHI), 7. November 2000 (2000-11-07)
- PATENT ABSTRACTS OF JAPAN Bd. 2000, Nr. 12, 3. Januar 2001 (2001-01-03) -& JP 2000 236806 A (KYUSHU DENSHI KOGAKU:KK; SOSEI:KK), 5. September 2000 (2000-09-05)
- PATENT ABSTRACTS OF JAPAN Bd. 2003, Nr. 01, 14. Januar 2003 (2003-01-14) -& JP 2002 254078 A (NIPPON TORIMU:KK), 10. September 2002 (2002-09-10)
- PATENT ABSTRACTS OF JAPAN Bd. 2003, Nr. 05, 12. Mai 2003 (2003-05-12) -& JP 2003 010865 A (HIKARI BERUKOMU:KK), 14. Januar 2003 (2003-01-14)
- PATENT ABSTRACTS OF JAPAN Bd. 1997, Nr. 11, 28. November 1997 (1997-11-28) -& JP 09 173021 A (DAIICHI KASEI:KK), 8. Juli 1997 (1997-07-08)

## Beschreibung

Die vorliegende Erfindung betrifft ein Verfahren zur Herstellung von Lebensmitteln, denen bei der Produktion Wasser zugesetzt wird, insbesondere Fleisch-, Wurst- und Pökelwaren, sowie entsprechende Lebensmittel.

Neben chemoanalytischen Methoden zur Beurteilung der Produktqualität bei Lebensmitteln kommt auch der elektrochemischen Messung des Redoxpotentials eine hohe Bedeutung zu. Das Redoxpotential repräsentiert ein Maß für das Elektronenabgabevermögen, wobei ein niedriger Wert des Redoxpotentials gleichbedeutend ist mit einem hohen Elektronenabgabevermögen. Das Redoxpotential beeinflusst die Haltbarkeitseigenschaften von Lebensmitteln und gibt Auskunft über ihre reduzierende bzw. antioxidative Wirkung in Bezug auf freie Radikale. Lebensmittel mit niedrigem Redoxpotential sind daher durch ihre Fähigkeit, freie Radikale zu binden, qualitativ hochwertiger und gesundheitlich besonders wertvoll.

In Zusammenhang mit der Beeinflussung des Redoxpotentials von Wasser schlägt beispielsweise die WO 95/07857 A vor, Wasserstoffatome mit bestimmten physikalisch-chemischen Eigenschaften von einem ausgewählten Ausgangsstoff auf das Wasser zu übertragen. Das so behandelte Wasser dient zum Beispiel als Trinkwasser, der Bewässerung von Pflanzen oder der Verwendung als Aquariumwasser. Ebenso wird vorgeschlagen, Wasser mit vermindertem Redoxpotential bei der Herstellung von Brot einzusetzen.

Die EP 1 413 555 A1 beschreibt ein Verfahren, die Beeinflussung des Redoxpotentials verschiedener Substanzen durch den Einsatz von in Wasser gelöstem Wasserstoff zu realisieren. Die Wasserstoffmoleküle werden hierbei in Gegenwart eines Katalysators gespalten, so dass freie Wasserstoffatome entstehen. Dies bewirkt, dass die jeweilige Ausgangssubstanz, die indirekt an dieser Reaktion beteiligt ist, in einen gesättigten Zustand übergeht, so dass deren Redoxpotential verringert und eine Oxidation derselben verhindert werden kann.

Eine weitere Verwendung von Flüssigkeiten, beispielsweise Wasser, mit verändertem Redoxpotential wird durch die WO 96/16555 A offenbart. So dienen diese Flüssigkeiten der Desinfizierung bzw. Sterilisation von Lebensmitteln oder Futtermitteln bzw. entsprechender Anlagen zur Herstellung dieser Produkte. Diese werden mit der Flüssigkeit besprüht, weiteren - chemischen Verfahrensschritten, wie z.B. einer elektrischen Aufladung oder einer elektromagnetischen Bestrahlung, unterzogen und abschließend getrocknet.

Auch die JP 2000 308891 A schlägt vor, Wasser in Verbindung mit Lebensmitteln einzusetzen. Das Wasser weist dabei ein bestimmtes Redoxpotential auf, welches eine gewisse Grenze nicht überschreiten soll, wobei diese Grenze in Abhängigkeit des vorliegenden pH-Wertes definiert wird. Zur Erzielung des gewünschten Redoxpotentials wird das Wasser mit Kohlendioxid versetzt.

Einen weiteren Einsatz von Wasser mit vermindertem Redoxpotential sieht die JP 2000 236806 A vor. Hier kommt es beim Auftauen von gefrorenem Fleisch zum Einsatz, wodurch dessen Haltbarkeit verbessert werden soll.

Um Wasser mit einem verringerten Redoxpotential herzustellen, schlägt die JP 2002 254078 A vor, Natriumhydroxid in Wasser zu lösen. Die so erhaltene Lösung wird anschließen elektrolysiert, wodurch ein Redoxpotential zwischen -5 bis -1.000 mV resultiert.

Ein weiteres Verfahren, Wasser mit einem verminderten Redoxpotential herzustellen, beschreibt die JP 2003 010865 A. Hierbei werden Magnesiumplättchen in einer Mischung aus Wasser und organischer Säure gelöst. Der entstehende Wasserstoff wird durch das Wasser gebunden und bewirkt schließlich die eigentliche Veränderung des Redoxpotentials.

Die US 6,284,293 B1 offenbart ein Verfahren zur Sauerstoffanreicherung von Wasser. Nach der Klärung des Wassers mittels Filtrierung und Enthärtung sowie dem Einsatz der Umkehrosmose wird das Wasser einem Strom aufgesetzt, wodurch eine geringe Menge des Wassers in Sauerstoff und Wasserstoff gespalten wird. Schließlich wird das verbleibende Wasser durch ein sauerstoffreiches Milieu geleitet, so dass dessen Sauerstoffgehalt weiter angereichert werden kann.

Durch die JP 09 173021 A wird schließlich ein Verfahren zur Herstellung von Fleisch enthaltenden Lebensmitteln beschrieben, das die Gefahr einer Vergilbung derselben verhindern soll. Hierfür wird das Redoxpotential des Rohfleisches sowie das Verhältnis von freiem Tryptophan und dem Gesamtgehalt an freien Aminosäuren auf bestimmte Werte eingestellt, wobei ausgewählte Radikalfänger zum Einsatz kommen.

Ein Verfahren zur Herstellung einer fettreduzierten Brühwurst offenbart die DE 101 06 553 A1. Hierbei wird die Gesamtfleischmasse zunächst gewolft und gekühlt. Ein Teil der gewolften Fleischmasse wird anschließend unter Eiszugabe gekuttert. Im abschließenden Verfahrensschritt wird die restliche leicht angefrorene Fleischmasse zugegeben und aus der Gesamtmasse ein Brät hergestellt.

Aufgabe der vorliegenden Erfindung ist es, eine elektrochemisch optimierte Produktqualität von Lebensmitteln, insbesondere von Fleisch-, Wurst- und Pökelwaren, zu erreichen.

Die Aufgabe wird gelöst mit Lebensmitteln sowie einem Verfahren zu deren Herstellung mit den Merkmalen der unabhängigen Ansprüche.

Bei der Produktion von Lebensmitteln, insbesondere Fleisch-, Wurst- und Pökelwaren, wird diesen aus verarbeitungstechnischen Gründen Wasser zugesetzt. In einem erfindungsgemäßen Verfahren zur Herstellung von Lebensmitteln wird das zugesetzte Wasser zuvor einem Verfahren zur Verbesserung der Wasserqualität, insbesondere zur Verminderung seines Redoxpotentials, unterzogen, so dass auch im Endprodukt eine elektrochemisch optimierte Qualität erreicht wird. Erfindungsgemäßen Lebensmitteln ist Wasser mit einem gegenüber herkömmlichem Wasser vermindertem Redoxpotential zugesetzt. Ein weiterer Vorteil ergibt sich daraus, dass das Wasser nach dem der Produktion vorgeschalteten Prozess einen Eisbereiter durchläuft und den Lebensmitteln in vereister Form zugesetzt wird. Neben produktionstechnischen Vorteilen werden durch das Einfrieren des Wassers ebenfalls elektrochemische Verbesserungen durch Veränderung der Molekülstrukturen erreicht. Lebensmittel, denen das Wasser in vereister Form zugesetzt ist, weisen daher ebenfalls elektrochemische Verbesserungen auf. Neben der Neutralisationskapazität für gesundheitsschädliche freie Radikale werden hierdurch auch hervorragende Geschmacks- und Haltbarkeitseigenschaften erreicht. Auch im Hinblick auf gängige Produktionsmethoden, die Lebensmittel starken oxidativen Prozessen unterwerfen, kommt einer elektrochemischen Optimierung der Produkte eine besondere Bedeutung zu.

Wird der Prozess zur Verbesserung der Wasserqualität mindestens zweistufig durchgeführt, werden besonders günstige elektrochemische und geschmackliche Eigenschaften des Wassers und des Endproduktes erreicht.

Vorteilhafterweise wird das Redoxpotential des Wassers in einer Prozessstufe durch Veränderung seiner Molekülstruktur vermindert. Wassermoleküle verbinden sich über Wasserstoffbrückenbindungen zu größeren Molekülverbänden, sogenannten Clustern. Eine Veränderung dieser Clusterstrukturen wirkt sich auch auf das Redoxpotential des Wassers aus. Ist das Redoxpotential des zugesetzten Wassers durch Veränderung seiner Molekülstruktur reduziert, wird in entsprechenden Lebensmitteln eine besonders günstige elektrochemische Qualität erreicht.

Ebenso ist es vorteilhaft, wenn das den Lebensmitteln zugesetzte Wasser in einer Prozessstufe durch mechanische Verwirbelung behandelt wird. Das Redoxpotential des Wassers wird hierbei weiter vermindert, der Sauerstoffgehalt des Wassers zugleich erhöht. Hierdurch ergeben sich sowohl gesundheitliche als auch geschmackliche Verbesserungen im Wasser. Bei entsprechend hergestellten Lebensmitteln werden dadurch ebenfalls gesundheitliche und geschmackliche Verbesserungen erzielt.

Besonders vorteilhaft ist es, wenn das Redoxpotential des Wassers in einer ersten Prozessstufe durch Veränderung seiner Molekülstruktur vermindert wird und in einer zweiten Prozessstufe durch mechanische Verwirbelung unter Sauerstoffanreicherung vermindert wird. Das Redoxpotential des Wassers wird hierdurch besonders stark vermindert.

Werden die Wassermoleküle des Wassers zu Clustern ähnlich wie bei einem frischen Quellwasser angehäuft, so werden die Eigenschaften des Wassers positiv verändert. Die biologische Qualität, der Geschmack, die Lösungsfähigkeit und die Kristallstruktur des Wassers entsprechen damit etwa dem des frischen Quellwassers. Zu erreichen ist dies beispielsweise mit einem Gerät mit dem Handelsnamen "Aqua blue" der Firma Löhnert GmbH oder "Silverspin" von der Firma Seemann KG.

Werden zur Produktion der Lebensmittel Rohwaren, insbesondere Fleischrohwaren, mit gegenüber herkömmlichen Rohwaren vermindertem Redoxpotential verwendet, können besonders hochwertige Lebensmittel erzeugt werden. Nach einem solchen Verfahren hergestellte Lebensmittel weisen daher ein besonders niedriges Redoxpotential auf. Ein vermindertes Redoxpotential bei Fleischrohwaren lässt sich beispielsweise durch für die jeweiligen Schlachttiere stressarme Schlachtungsmethoden erreichen.

Weiterhin ist es vorteilhaft, zur Produktion der Lebensmittel Gewürze mit gegenüber herkömmlichen Gewürzen vermindertem Redoxpotential zu verwenden. In entsprechend hergestellten Lebensmitteln lässt sich hierdurch eine weitere elektrochemische Verbesserung erreichen.

Ebenfalls vorteilhaft ist es, wenn die Produktion der Lebensmittel mittels oxidationsvermindernder Verarbeitungstechniken, beispielsweise unter Luftabschluss erfolgt.

Wird die Oberflächenspannung des Wassers gegenüber herkömmlichem Wasser erniedrigt, so ist dies ein Hinweis auf eine stattgefundene Energetisierung des Wassers. Die Verdauung und das Wohlbefinden des Konsumenten wird hierdurch positiv beeinflusst.

Leitungswasser verwendet wird, dessen Kristallstruktur derart verändert wird, dass sie demjenigen von Quellwasser gleicht. Die Kristalle sind damit kleiner und nicht so dicht verwoben. Sie weisen häufiger eine 60°-Winkelstruktur auf als bei einem unbehandelten Leitungswasser. Dies entspricht eher einer natürlichen Wasserqualität wie bei Quellwasser. Dieses Wasser regt den Stoffwechsel des Verbrauchers an und hat eine belebende Wirkung.

Nach dem Verfahren hergestellte Lebensmittel, welche das entsprechende Wasser beinhalten, weisen die oben genannten Vorteile auf.

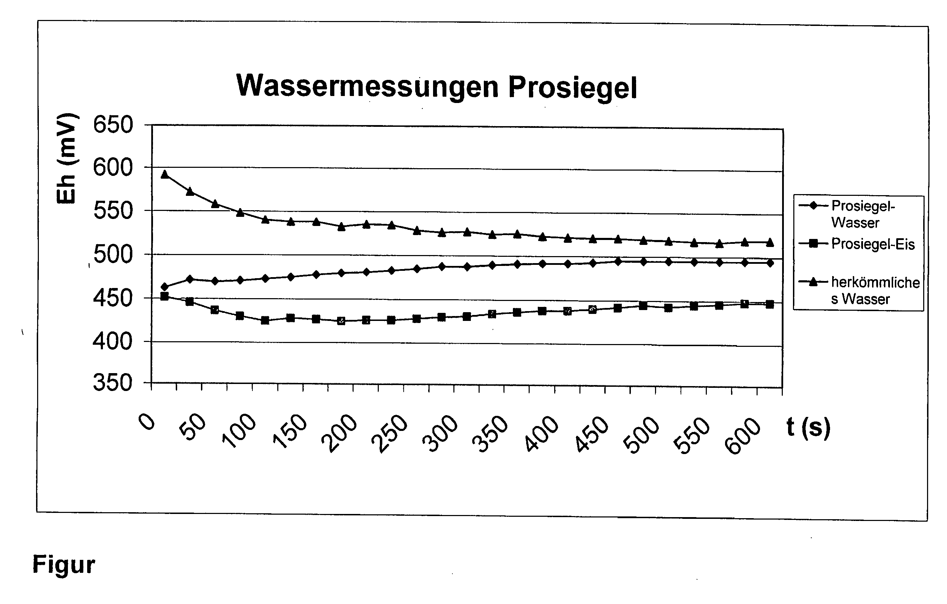

Die elektrochemische Messung des Redoxpotentials wird anhand der Figur beschrieben.

Die Figur zeigt eine schematische Darstellung, aus welcher die Veränderungen des Redoxpotentials des behandelten Wassers ersichtlich sind. In der Messung wurden Proben eines gemäß den Patentansprüchen behandelten Wassers sowie eines solchen Eises einer Probe eines herkömmlichen Wassers gegenübergestellt. Die Messwerte des Redoxpotentials zeigen zunächst das Einlaufverhalten der Messelektroden mit stark schwankenden Werten. Nach einer gewissen Zeitdauer stellt sich ein Fließgleichgewicht zwischen oxidierten und reduzierten Stoffen in der Probe ein, so dass ein stationärer Wert gemessen werden kann.

Das Diagramm zeigt deutlich, dass ein gemäß den Ansprüchen behandeltes Wasser ein gegenüber herkömmlichem Wasser um etwa 20mV vermindertes Redoxpotential aufweist. Weiterhin zeigen die Messwerte, dass das Redoxpotential des Wassers durch Einfrieren um weitere 50 mV gesenkt werden kann. Diese elektrochemischen Veränderungen sind auch in entsprechend hergestellten Lebensmitteln messbar.

Die gesundheitliche und geschmackliche Qualität elektrochemisch optimierter Lebensmittel ist daher gegenüber herkömmlichen Lebensmitteln deutlich verbessert. Bei einem niedrigeren Wert des Redoxpotentials ist das Wasser weniger gesättigt und kann daher mehr Schlacken und überschüssige Mineralien aus dem Körper ausschwemmen. Durch längere Molekülverbindungen kann das Wasser Mineralien und andere Stoffe besser binden.

## Patentansprüche

1. Verfahren zur Herstellung von Lebensmitteln in Form von Fleisch-, Wurst- und Pökelwaren, wobei den Lebensmitteln bei der Produktion Wasser zugesetzt wird, **dadurch gekennzeichnet, dass** das zugesetzte Wasser zur Erreichung einer elektrochemisch optimierten Produktqualität in einem der Produktion vorgeschalteten Prozess einem Verfahren zur Verminderung seines Redoxpotentials unterzogen wird und nach dem der Produktion vorgeschalteten Prozess einen Eisbereiter durchläuft und den Lebensmitteln bei der Produktion in vereister Form zugesetzt wird.

2. Verfahren nach dem vorherigen Anspruch, **dadurch gekennzeichnet, dass** der der Produktion vorgeschaltete Prozess mindestens zweistufig durchgeführt wird.

3. Verfahren nach einem der vorherigen Ansprüche, **dadurch gekennzeichnet, dass** in einer Prozessstufe das Redoxpotential des Wassers durch Veränderung seiner Molekülstruktur vermindert wird.

4. Verfahren nach einem der vorherigen Ansprüche, **dadurch gekennzeichnet, dass** in einer Prozessstufe das Redoxpotential des Wassers durch mechanische Verwirbelung vermindert wird und der Sauerstoffgehalt des Wassers erhöht wird.

5. Verfahren nach einem der vorherigen Ansprüche, **dadurch gekennzeichnet, dass** das Redoxpotential des Wassers in einer ersten Prozessstufe durch Veränderung seiner Molekülstruktur vermindert wird und in einer zweiten Prozessstufe durch mechanische Verwirbelung unter Sauerstoffanreicherung vermindert wird.

6. Verfahren nach einem der vorherigen Ansprüche, **dadurch gekennzeichnet, dass** die Wassermoleküle des Wassers zu Clustern ähnlich wie bei einem frischen Quellwasser angehäuft werden.

7. Verfahren nach einem der vorherigen Ansprüche, **dadurch gekennzeichnet, dass** zur Produktion der Lebensmittel Rohwaren, insbesondere Fleischrohwaren, mit gegenüber herkömmlichen Rohwaren vermindertem Redoxpotential verwendet werden.

8. Verfahren nach einem der vorherigen Ansprüche, **dadurch gekennzeichnet, dass** zur Produktion der Lebensmittel Gewürze mit gegenüber herkömmlichen Gewürzen vermindertem Redoxpotential verwendet werden.

9. Verfahren nach einem der vorherigen Ansprüche, **dadurch gekennzeichnet, dass** die Produktion der Lebensmittel mittels oxidationsvermindernder Verarbeitungstechniken erfolgt.

10. Verfahren nach einem der vorherigen Ansprüche, **dadurch gekennzeichnet, dass** die Oberflächenspannung des Wassers gegenüber herkömmlichem Wasser erniedrigt wird.

11. Lebensmittel in Form von Fleisch-, Wurst- und Pökelwaren, denen Wasser zugesetzt ist, **dadurch gekennzeichnet, dass** das zugesetzte Wasser zur Erreichung einer elektrochemisch optimierten Produktqualität ein gegenüber herkömmlichem Wasser vermindertes Redoxpotential aufweist, wobei das Wasser den Lebensmitteln in vereister Form zugesetzt ist.

12. Lebensmittel nach dem vorherigen Anspruch, **dadurch gekennzeichnet, dass** das Redoxpotential des Wassers durch Veränderung seiner Molekülstruktur vermindert ist.

13. Lebensmittel nach einem der vorherigen Ansprüche, **dadurch gekennzeichnet, dass** das Redoxpotential des Wassers durch mechanische Verwirbelung unter Sauerstoffanreicherung vermindert ist.

14. Lebensmittel nach einem der vorherigen Ansprüche, **dadurch gekennzeichnet, dass** die zur Produktion verwendeten Rohwaren, insbesondere Fleischrohwaren, ein gegenüber herkömmlichen Rohwaren vermindertes Redoxpotential aufweisen.

15. Lebensmittel nach einem der vorherigen Ansprüche, **dadurch gekennzeichnet, dass** die zur Produktion verwendeten Gewürze ein gegenüber herkömmlichen Gewürzen vermindertes Redoxpotential aufweisen.

16. Lebensmittel nach einem der vorherigen Ansprüche, **dadurch gekennzeichnet, dass** die Oberflächenspannung des Wassers gegenüber herkömmlichem Wasser erniedrigt ist.

## Claims

1. A method for the manufacture of foodstuffs in the form of meat products, charcuterie and salted foods where water is added to the foodstuff in the course of production, **characterized in that**, in order to achieve an electrochemically optimized product quality, the additional water is subjected to a method for reducing its oxidation-reduction potential in a process that precedes the food production, and that after the process that precedes production it passes through an icing device, being added to the foodstuff in the production process in frozen form.

2. A method according to the foregoing claim, **characterized in that** the process that precedes production is carried out in at least two stages.

3. A method according to one of the foregoing claims, **characterized in that** in one stage of the process the oxidation-reduction potential of the water is reduced by changing its molecular structure.

4. A method according to one of the foregoing claims, **characterized in that** in one stage of the process the oxidation-reduction potential of the water is reduced by mechanical vortexing while raising the oxygen content of the water.

5. A method according to one of the foregoing claims, **characterized in that** the oxidation-reduction potential of the water is reduced in a first stage of the process by changings its molecular structure, and in a second stage of the process by mechanical vortexing while increasing the oxygen content.

6. A method according to one of the foregoing claims, **characterized in that** the water molecules group into clusters similar to those found in fresh spring water.

7. A method according to one of the foregoing claims, **characterized in that** the raw materials used in production of the foodstuffs, in particular raw meat products, has a reduced oxidation-reduction potential in comparison with conventional raw materials.

8. A method according to one of the foregoing claims, **characterized in that** the seasoning used in production of the foodstuffs has a reduced oxidation-reduction potential in comparison with conventional seasoning.

9. A method according to one of the foregoing claims, **characterized in that** the foodstuffs are produced using processing techniques that minimize oxidation.

10. A method according to one of the foregoing claims, **characterized in that** the surface tension of the water is reduced in comparison with conventional water.

11. Foodstuffs in the form of meat products, charcuterie and salted foods to which water is added, **characterized in that** in order to achieve an electrochemically optimized product quality, the added water has an oxidation-reduction potential reduced in comparison with conventional water, and where the water is added to the foodstuffs in frozen form.

12. The foodstuffs according to the foregoing claim, **characterized in that** the oxidation-reduction potential of the water has been reduced through changes of its molecular structure.

13. Foodstuffs according to one of the foregoing claims **characterized in that** the oxidation-reduction potential of the water is reduced by mechanical vortexing while raising the oxygen content.

14. Foodstuffs according to one of the foregoing claims, **characterized in that** the raw materials used for production, raw meat products in particular, have an oxidation-reduction potential reduced in comparison with conventional raw materials.

15. The foodstuffs according to one of the foregoing claims, **characterized in that** the seasoning used for production has an oxidation-reduction potential reduced in comparison with conventional seasoning.

16. Foodstuffs according to one of the foregoing claims, **characterized in that** the surface tension of the water is reduced in comparison with that of conventional water.

## Revendications

1. Procédé pour la fabrication de denrées alimentaires sous forme de produits de boucherie-charcuterie et de produits saumurés, sachant que de l'eau est additionnée aux denrées alimentaires lors de la production, **caractérisé en ce que** pour l'obtention d'une qualité de produits optimale sur le plan électrochimique, l'eau additionnée est soumise à un procédé destiné à la réduction de son potentiel d'oxydoréduction placé en amont du procédé de fabrication, et qu'après le procédé placé en amont du procédé de fabrication, elle parcourt une machine à glace et que lors de la production, elle est additionnée aux denrées alimentaires sous forme gelée.

2. Procédé selon la revendication précédente, **caractérisé en ce que** le procédé placé en amont de la fabrication est exécuté au moins en deux étapes.

3. Procédé selon l'une quelconque des revendications précédentes, **caractérisé en ce que** dans une étape du processus, le potentiel d'oxydoréduction de l'eau est réduit par modification de sa structure moléculaire.

4. Procédé selon l'une quelconque des revendications précédentes, **caractérisé en ce que** dans une étape du processus, le potentiel d'oxydoréduction de l'eau est réduit par tourbillonnement mécanique et que la teneur en oxygène de l'eau est augmentée.

5. Procédé selon l'une quelconque des revendications précédentes, **caractérisé en ce que** le potentiel d'oxydoréduction de l'eau est réduit dans une première étape du processus par modification de sa structure moléculaire et, dans une deuxième étape du processus, qu'il est réduit par tourbillonnement mécanique avec enrichissement en oxygène.

6. Procédé selon l'une quelconque des revendications précédentes, **caractérisé en ce que** les molécules d'eau sont agglomérées en essaims de molécules similaires à ceux d'une eau de source fraîche.

7. Procédé selon l'une quelconque des revendications précédentes, **caractérisé en ce que** pour la production des denrées alimentaires, des matières premières sont utilisées, particulièrement des produits de charcuterie-boucherie bruts, qui présentent un potentiel d'oxydoréduction réduit par rapport à celui de matières premières conventionnelles.

8. Procédé selon l'une quelconque des revendications précédentes, **caractérisé en ce que** pour la production des denrées alimentaires, des aromates sont utilisés, qui présentent un potentiel d'oxydoréduction réduit par rapport à celui d'aromates conventionnels.

9. Procédé selon l'une quelconque des revendications précédentes, **caractérisé en ce que** la fabrication des denrées alimentaires s'effectue au moyen de techniques de traitement réductrices d'oxydation.

10. Procédé selon l'une quelconque des revendications précédentes, **caractérisé en ce que** la tension superficielle de l'eau est réduite par rapport à celle de l'eau conventionnelle.

11. Denrées alimentaires sous forme de produits de charcuterie-boucherie et de produits saumurés, auxquelles de l'eau est additionnée, **caractérisées en ce que** pour l'obtention d'une qualité de produits optimale sur le plan électrochimique, l'eau additionnées présente un potentiel d'oxydoréduction réduit par rapport à celui de l'eau conventionnelle, sachant que l'eau est additionnée aux denrées alimentaires sous forme gelée.

12. Denrées alimentaires selon la revendication précédente, **caractérisées en ce que** le potentiel d'oxydoréduction de l'eau est réduit par modification de sa structure moléculaire.

13. Denrées alimentaires selon l'une quelconque des revendications précédentes, **caractérisées en ce que** le potentiel d'oxydoréduction de l'eau est réduit par tourbillonnement mécanique avec enrichissement en oxygène.

14. Denrées alimentaires selon l'une quelconque des revendications précédentes, **caractérisées en ce que** les matières premières utilisées pour la fabrication, particulièrement les produits de charcuterie-boucherie bruts, présentent un potentiel d'oxydoréduction réduit par rapport à celui de matières premières conventionnelles.

15. Denrées alimentaires selon l'une quelconque des revendications précédentes, **caractérisées en ce que** les aromates utilisés pour la fabrication présentent un potentiel d'oxydoréduction réduit par rapport à celui d'aromates conventionnels.

16. Denrées alimentaires selon l'une quelconque des revendications précédentes, **caractérisées en ce que** la tension superficielle de l'eau est réduite par rapport à celle de l'eau conventionnelle.
